# EUROPEAN PATENT APPLICATION

(11) **EP 1 166 655 A1**
(43) Date of publication of application: **02.01.2002**
(21) Application number: 00112892.5
(22) Date of filing: 19.06.2000
(51) Int. Cl.: A23P 1/16, A23G 1/10, A23G 3/02

(54) **A shelf-stable or chilled foam product and a process for its preparation**

(71) Applicant: Société des Produits Nestlé S.A., 1800 Vevey (CH)
(72) Inventor: Hanselmann, William, 84503 Altoetting (DE); Mueller, Axel, 82054 Sauerlach (DE)
(74) Representative: Thomas, Alain

(57) **Abstract**

The present invention concerns a moist shelf-stable or chilled foam product having an overrun comprised between 5 and 400 %, comprising denaturated proteins and a component taken from the group consisting of fruit, vegetable, meat, milk base and a mixture thereof, wherein said foam product has bubbles, which are stabilised by protein denaturation at the interface of said bubbles and by a network building in the bulk.

## Description

The present invention concerns a shelf-stable or chilled foam product and a process for its preparation.

It is already known to have a shelf-stable foam product. The Japanese patent application No. 58-40052 in the name of Shikishima Seipan KK concerns a process for producing an aerated dessert food in a container. The problem with this patent is that they must operate with two mixtures, the first being whipped, the second not and then they mix both mixtures and carry out a sterilisation : this makes the process more complicated and expensive. Secondly, they proceed with cream, which makes it necessary to whip at low temperature, and the subsequent sterilisation will lead to a collapse of the foam. Thirdly, they carry out the whipping with air, which is not the best way to avoid any oxidation of the final product.

The aim of the present invention is to manufacture a shelf-stable or chilled foam product according to an easier way than in the prior art, with a whipping substantially without oxygen and allowing said whipped product to be sterilised in a safe way, that is without any risk of having a collapse of the foam.

The present invention concerns a moist shelf-stable or chilled foam product having an overrun comprised between 5 and 400 %, comprising denaturated proteins and a component taken from the group consisting of fruit, vegetable, meat,fish, milk base and a mixture thereof, wherein said foam product has bubbles, which are stabilised by protein denaturation at the interface of said bubbles and by a network building in the bulk.

By moist in the present specification, we understand that water is present in the product.

The specificity of the invention is that the foam product is obtained through a heat-treatment, which is carried out after the whipping. During this heat-treatment, the proteins reach a certain degree of denaturation , wherein film and bulk fixation and gelatinisation takes place : this gives the stabilisation of the bubbles of the foam product and a network building in the bulk. In the present specification, heat-treatment means any treatment with an increase of the temperature above 65 °C, which is the temperature at which begins the denaturation of the proteins. So, it is possible according the invention to pasteurise, sterilise or make any other heat-treatment.

The obtained moist product has a shelf-life of 3 to 18 months at room temperature. Preferably, the shelf-life is around 9 to 12 months without any organoleptic loss. But, it is also possible according to the invention to manufacture chilled products with a milder heat-treatment, but wherein a certain denaturation of the proteins occur.

The fruit can be any type of fruit. Preferably, the fruit is taken from the group consisting of apple, cherry, strawberry, pear, banana, kiwi, peach and others. The vegetable used can also be any type of vegetable. Preferably, the vegetable is taken from the group consisting of pea, bean, carrot, tomato, spinach. The meat used can be any type of meat, taken from the group consisitng of pork, veal, beaf, chicken. The fish can be any type of fish. The milk basis is either milk or a mixture of milk with water.

The proteins, which have been denaturated are native proteins. The native proteins are taken from the group consisting of milk protein (whey proteins and casein), egg white protein, yeast isolate, soya-bean protein, haemoglobin, plant protein isolate, meat protein, collagen, gelatine.

The amount of protein in the moist foam product can vary very broadly from 0.1 to 30 % based on the total amount of the final product. All the percentages are given by weight. In a preferred embodiment of the invention, the amount of protein is comprised between 1 and 5 %.

The overrun of the foam product is preferably comprised between 30 and 130 %. All types of products can be considered according to the invention : baby-food products, desserts, like mousses based on milk, water or fruits, petfoods, ice cream, culinary products.

The fruit, vegetable, meat and fish in the moist foam product can be either in the form of puree and/or pieces. The size of the pieces is not critical and can vary between 0.1 and 25 mm. The amount of fruit, vegetable, meat, fish and milk base is at least 10 %. Preferably, the amount of these components is between 10 and 60 %. It is also possible to consider a multi-layer product, wherein the moist foam product is one layer, the other being a layer of fruit or any other.

In one embodiment, the foam product of the invention contains further a starch. This is the case for example for a baby-food. This starch can be a native starch or a modified starch. This starch is taken from the group consisting of rice, maize, corn, semolina starch. In the case of a dessert, the foam product contains further a hydrocolloid. This hydrocolloid is taken from the group consisting of xanthan, carragheenan, guar.

It is finally possible that the moist foam product contains an oil and/or fat. Preferably, the oil is either sunflower oil or rape oil. The function of the oil is to increase the calorimetric density.

The moist foam product contains also an aroma, a colouring agent, chocolate, caramel, sugar, acids.

The amount of water in the product is around 40 to 95 %. The pH of the moist foam product of the invention is comprised between 3 and 7.

The invention concerns further a process for the preparation of the moist shelf-stable or chilled foam product described here above, wherein
- the mixture comprising the native proteins, the component taken from the group consisting of fruit, vegetable, meat, fish, milk basis and a mixture thereof and the starch and/or hydrocolloid and water is whipped at an overrun comprised between 5 and 400 %,
- the whipped mixture is filled in containers, closed and
- the closed containers are heat-treated.

As already mentioned, according to the invention, all the components are mixed together and then the whipping is carried out. It is possible to work in a continuous way with a line, which is simple and very efficient in terms of productivity.

As already mentioned in relation with the product, the whipping is carried out at an overrun of 30 to 130 %. The heat-treatment is carried out for the denaturation of the proteins at a temperature comprised between 65 and 145 °C.

The duration of this heat-treatment is around 1 min to 10 hours. The protein fixation at the interface and the network building in the bulk is performed already at 65 °C, but for a complete denaturation, it takes a much longer time.

It is possible according to the process of the invention to denature partially or totally the proteins. For example, in the case of a partial denaturation, a heat-treatment can be carried out at 100 °C for 10 min. Under such conditions, an interfacial and bulk fixation and gelatinisation is already built up and bubble stability reaches a sufficient level. Whereas, such a product must be stored chilled at 4 °C, if not acid. A good example of this type is a chilled fish mousse.

The heat-treatment is preferably carried out at a temperature comprised between 100 and 125 °C, during 20 to 40 min.

The whipping is carried out under a nitrogen, CO2, N2O, 02 atmosphere or a mixture of them at a maximum temperature of 60 °C. Preferably, the whipping is carried out at a temperature around the room temperature, that is in the area of 20 to 30 °C. Preferably, the whipping is carried out with nitrogen.

It is further important according to the invention to have a short period of time between the filling in containers and the heat-treatment : it is important to fix interface and bulk as soon as possible. If this time is reduced, the transfer of gas from the smallest bubbles to the larger bubbles is not very great, which is important for the final product : this is called the Ostwald ripening. In this case, the Ostwald ripening is slowed down or even stopped.

The time between filling and heat-treatment is normally in the area of half an hour.

In the case of the presence in the mixture of a native starch or a modified starch, it is preferred to proceed before the whipping to a pre-heating. This pre-heating is carried out at a temperature of up to 85 °C during several minutes. The mixture is then cooled down and the whipping is carried out. This pre-heating is not necessary in the case of the use of specific starches.

The filling in the containers is made under normal conditions, because of the heat-treatment after said filling. The containers are closed by the sealing of a lid, for example an aluminium lid. The containers used can be either cans, plastic containers, glass jars, tubular bags or any other available type of packaging. Preferably, plastic containers are used. Normally, oxygen barrier material is used. For example, it is preferred to use a 3 layers material, that is PP/EVOH/PP.

The present invention is further illustrated by the following examples.

### Example 1

Carrots are cut into pieces of 10 mm and cooked in water at a temperature of 85 °C. After the cooking, a homogenisation is carried out at a pressure of 100 bar. Starch is dissolved in water, mixed with the semolina and added to the carrots. A heating is then carried out at 85 °C during 2 min. and then the mixture is cooled down to 40 °C. Whey protein isolate is dissolved in water and added to the carrots as well as all other ingredients.
The carrots are mixed with the whey protein isolate and a whipping is carried out to an overrrun of 50 %.

The foam product is filled in plastic containers, sealed and a heat-treatment is carried out in-pack at 121 °C for 20 min.
The bubbles in the foam remain after the heat-treatment and the product is shelf-stable at room temperature during 12 months without any negative influence on the organoleptic properties.

### The final product has following recipe

| | |
|---|---|
| Carrot | 50 % |
| Apple puree | 10 % |
| Whey protein isolate | 5 % |
| Starch | 3 % |
| Rice semolina | 3 % |
| Sugar | 1.5 % |
| Water | 28.5 % |

## Claims

1. A moist shelf-stable or chilled foam product having an overrun comprised between 5 and 400 %, comprising denaturated proteins and a component taken from the group consisting of fruit, vegetable, meat, milk base and a mixture thereof, wherein said foam product has bubbles, which are stabilised by protein denaturation at the interface of said bubbles and by a network building in the bulk.

2. A moist shelf-stable or chilled foam product according to claim 1, wherein the denaturated proteins are native, partially hydrolysed proteins or enzymes, which have been heated, said native proteins being taken from the group consisting of milk protein, egg white protein, yeast isolate, soya-bean protein, haemoglobin, plant protein isolate, meat protein, collagen, gelatine.

3. A moist shelf-stable or chilled foam product according to any of claims 1 or 2, wherein the amount of protein is comprised between 0.1 and 30 %.

4. A moist shelf-stable or chilled foam product according to claim 3, wherein the amount of protein is comprised between 1 and 5 %.

5. A moist shelf-stable or chilled foam product according to any of claims 1 to 4, wherein the overrun is comprised between 30 and 130 %.

6. A moist shelf-stable or chilled foam product according to any of claims 1 to 5, wherein the fruit , vegetable and meat are in the form of puree and/or pieces.

7. A moist shelf-stable or chilled foam product according to any of claims 1 to 6, wherein the amount of fruit, vegetable, meat or milk base is at least 10 %.

8. A moist shelf-stable or chilled foam product according to any of claims 1 to 7, wherein it contains further a starch and/or a hydrocolloid.

9. A moist shelf-stable or chilled foam product according to any of claims 1 to 8, wherein it contains further oil and/or fat.

10. A process for the preparation of a moist shelf-stable or chilled foam product according to any of claims 1 to 9, wherein
- the mixture comprising the native proteins, the component taken from the group consisting of fruit, vegetable, meat, milk basis and a mixture thereof and the starch and/or hydrocolloid and water is whipped at an overrun comprised between 5 and 400 %,
- the whipped mixture is filled in containers, closed and
- the closed containers are heat-treated.

11. A process according to claim 10, wherein the whipping is carried out at an overrun of 30 to 130 %.

12. A process according to claim 10 or 11, wherein the heat-treatment is carried at a temperature comprised between 65 and 145 °C.

13. A process according to claim 12, wherein the heat-treatment is carried out from 1 min. to 10 hours.

14. A process according to any of claims 10 to 13, wherein the whipping is carried out at a maximum temperature of 60 °C with nitrogen.

15. A process according to claim 14, wherein the whipping is carried out at a temperature of 20 to 30 °C.

16. A process according to any of claims 10 to 15, wherein a pre-heating is carried out before the whipping of the mixture.

17. A process according to any of claims 10 to 16, wherein the containers are plastic containers, cans, glass jars, tubular bags.
